# EUROPÄISCHE PATENTANMELDUNG

(11) **EP 1 186 737 A2**
(43) Veröffentlichungstag der Anmeldung: **13.03.2002**
(21) Anmeldenummer: 01121340.2
(22) Anmeldetag: 06.09.2001
(51) Int. Cl.: E05B 65/19, E05B 15/02, F16F 15/08

(54) **Fahrzeugtür**

(30) Priorität: 06.09.2000 DE 10044137
(71) Anmelder: Carl Freudenberg KG, 69469 Weinheim (DE)
(72) Erfinder: Back, Friedrich, 79379 Müllheim (DE)

(57) **Zusammenfassung**

Fahrzeugtür, umfassend zumindest einen mittels eines Scharniers aufklappbar an einer Karosserie befestigten Türflügel sowie einen Schnappverschluss, der an dem dem Scharnier gegenüberliegenden Ende des Türflügels angebracht ist und zumindest einen Schließbügel umfasst, der unter einer in Richtung des Scharniers gerichteten elastischen Zugbelastung im vorstehenden Ende einer Halteöse einschnappbar ist, der Schnappverschluss und die Karosserie und/oder der Türflügel durch eine Gummischicht relativ beweglich verbunden sind, die Gummischicht den Spalt zwischen zwei Tragplatten ausfüllt und in diesem festgelegt ist, die Tragplatten einerseits an der Karosserie und andererseits an der Tür starr festgelegt sind, wobei die Gummischicht (1) Anteile (1.2, 1.1) aufweist, die in Zugrichtung vor und hinter dem Schnappverschluss (8) angeordnet sind und dass die an der Karosserie festgelegte, erste Tragplatte (3) die Gummischicht an dem in Richtung (5) der Zugbelastung weisenden, vorderen Ende mit einer ersten Auflaufschräge (6) in einem ersten Teilbereich hintergreift.

## Beschreibung

### Technisches Gebiet

Die Erfindung betrifft eine Fahrzeugtür mit zumindest einem, mittels eines Scharniers aufklappbar an einer Karosserie befestigten Türflügels, sowie einem Schnappverschluss, der an dem dem Scharnier gegenüberliegenden Ende des Türflügels angebracht ist und zumindest einen Schließbügel umfasst, der unter einer, in Richtung des Scharniers gerichteten elastischen Zugbelastung im vorstehenden Ende einer Halteöse einschnappbar ist, der Schnappverschluss und die Karosserie und/oder der Türflügel durch eine Gummischicht relativ beweglich verbunden sind, die Gummischicht den Spalt zwischen zwei Tragplatten ausfüllt und an diesen festgelegt ist und die Tragplatten einerseits an der Karosserie und andererseits an der Tür starr festgelegt sind.

### Stand der Technik

Im Innenraum von Kraftfahrzeugen insbesondere von Kombi-Personenkraftwagen, kann es beim Durchfahren einer Schlechtwegstrecke vorkommen, dass die Luft im Innenraum des Fahrzeuges zu Schwingungen angeregt wird und es zu einer Schallpegelüberhöhung kommt. Durch die Schwingungsanregung wirkt auf die Fahrzeuginsassen ein unangenehmer Ohrendruck. Die Geräuschentwicklung ist insbesondere bei Kombi-Personen-Kraftwagen ausgeprägt und wird auch als "Kombi-Wummern" bezeichnet. In der deutschen Patentschrift DE 195 24 160 wird vorgeschlagen, die Heckklappe in Verbindung mit einem Federdämpfersystem als Schwingungstilger zu verwenden. Hierbei ist die Heckklappe mit begrenztem Spiel in ihrer geschlossenen Position im Heckabschnitt gehalten und zwischen Heckklappe und Heckausschnitt das Federdämpfersystem angeordnet. Letzteres wird durch das elastische Verhalten der im Heckausschnitt umlaufenden Gummidichtung gebildet und ist hinsichtlich der Dämpfungseigenschaften auf die niedrigste Eigenfrequenz des Innenraumes in Fahrzeuglängsrichtung abgestimmt.

Um eine möglichst breitbandige Schwingungsisolierung im Innenraum eines Kombikraftwagens zu erreichen, wird in DE 195 48 282 vorgeschlagen, zwei Entkopplungselemente zu verwenden, wobei die beiden Entkopplungselemente voneinander abweichende Feder- und Dämpferraten aufweisen. Sowohl der Schließzylinder als auch der Schließbügel sind jeweils durch ein Entkopplungselement schwingungsentkoppelt mit der Heckklappe und oder der Karosserie verbunden. Das Verschließen der Heckklappe erfolgt durch einen Schließmechanismus, der die Heckklappe gegen den elastisch nachgiebigen Elastomerkörper zieht.

In Zugrichtung liegende Anteile der Gummischicht werden beim Schließen der Tür gepresst. Hingegen erfahren jene Anteile der Gummischicht, die in Zugrichtung gesehen vor dem Schnappverschluss liegen eine Zugbeanspruchung. Die auf Zug beanspruchten Bereiche der Gummischicht begrenzen die Lebensdauer des Entkopplungselementes. Am Ende der Gebrauchsdauer reißt meist der auf Zug beanspruchte Gummi-Metall-Verbund.

Der Schnappverschluss wird meist durch eine Halteöse und einen Schließbügel gebildet. In der geschlossenen Stellung der Heckklappe wirkt durch die Halteöse auf den Schließbügel eine in Richtung des Scharniers gerichtete elastische Zugbelastung. Das nachgiebige Verhalten des Elastomers führt dazu, dass der Schließbügel in Zugrichtung kippt. Die Halteöse und der Schließbügel verkanten. Zwischen den schließenden Bauteilen verringert sich die Pressfläche. Als Folge der erhöhten Flächenpressung kommt es zu einer Verformung der Schließelemente, was die Dauerhaltbarkeit des Schließmechanismus reduziert.

### Darstellung der Erfindung

Aufgabe der Erfindung ist es, eine Fahrzeugtür der eingangs genannten Art derart weiterzubilden, dass akustisch störende Schwingungen im Innenraum deutlich reduziert werden, eine Annäherung der Halteöse zum Dämpfungselement weitgehend unterbunden und ein erhöhter Verschleiß zwischen Halteöse und Schließbügel vermieden wird.

Diese Aufgabe wird erfindungsgemäß mit den Merkmalen von Patentanspruch 1 gelöst. Auf vorteilhafte Ausgestaltung nehmen die Unteransprüche Bezug.

Gemäß der Erfindung ist vorgesehen, dass die Gummischicht Anteile aufweist, die in Zugrichtung vor und hinter dem Schnappverschluss angeordnet sind und dass die an der Karosserie festgelegte erste Tragplatte die Gummischicht an dem in Richtung der Zugbelastung weisenden, vorderen Ende mit einer Auflaufschräge in einem ersten Teilbereich hintergreift. Beim Schließen der Fahrzeugtür, bei der die Halteöse unter einer elastischen Zugspannung mit dem Schließbügel einschnappt, wirkt auf die, zwischen den Tragplatten, beispielsweise durch Vulkanisation festgelegten Gummischicht eine Schubbeanspruchung. Im Bereich des in Zugrichtung weisenden vorderen Endes der Tragplatten verursacht die Auflaufschräge der an der Karosserie festgelegten Tragplatte, dass auf das Elastomer ein-mit der Zugbelastung zunehmend, in Richtung der Flächennormalen der Vulkanisationsfläche gerichtete Gegenkraft wirkt. In Folge davon unterliegt die Gummischicht im Bereich der Auflaufschräge einer Schub- und Druckbeanspruchung. Da aber der Schubmodul eines Elastomers sehr viel kleiner ist als der Kompressionsmodul, erreicht man durch die erfindungsgemäße Anordnung, dass auf den Schließbügel ein Drehmoment ausgeübt wird, welches - je nach Verformbarkeitseigenschaften des Elastomers und je nach Ausgestaltung der auflaufenden Schräge der Tragplatten - dazu führt, dass sich der Schließbügel entweder in/oder gegen die Richtung Zugbelastung neigt. Es kommt also entweder zu einem Kippen des Schließbügels in oder gegen die Zugrichtung. Durch geeignete Einstellungen des elastomeren Werkstoffs und durch konstruktive Auslegung der Auflaufschräge ist der Fachmann in der Lage, zumindest in der Schließstellung der Fahrzeugtür ein Kippen des Schließbügels nahezu vollständig zu vermeiden. In der Schließstellung wirken dann die zwischen den Schließelementen, Halteöse und Schließbügel, konstruktiv vorgesehenen Pressflächen. Die Erfindung ermöglicht eine schwingungsentkoppelte Anordnung der Fahrzeugtür gegenüber der Karosserie, ohne dass dabei die Schließelemente einem erhöhten Verschleiß unterliegen. Die Dauerhaltbarkeit der Tür verbessert sich. Der zwischen Tür und Karosserie gebildete Spalt ist gleich groß. Die Tür kann besser und kostengünstiger abgedichtet werden.

Es empfiehlt sich, dass die Auflaufschräge die Gummischicht an dem in Richtung der Zugspannung weisenden vorderen Ende zusätzlich in einem Teilbereich, zumindest auf einer Seite, mit einer Seitenschräge umgreift. Die Fahrzeugtür wird beim Schließen dadurch seitlich geführt.

Hierbei ist bevorzugt, dass die erste Tragplatte an dem von der Auflaufschräge abgewandten Ende mit einer Ablaufschräge versehen ist, die die Gummischicht an diesem Ende in einem zweiten Teilbereich hintergreift. Durch die Ablaufschräge wird der Effekt des sich bei Zugbelastung entgegen die Zugrichtung kippenden Schließbügels verstärkt. Hierbei ist bevorzugt, dass die erste Auflaufschräge und die erste Tragplatte mit der gedachten Verlängerung der Tragplatte, bezogen auf deren Verlauf, in der Höhe des Schnappverschlusses einen steileren Anstellwinkel miteinander einschließen als die Ablaufschräge und die Verlängerung. Die Präzision des Schnappverschlusses bleibt dadurch über einen langen Betriebszeitraum erhalten.

Besonders bevorzugt ist, dass die Auflaufschräge und/oder die Ablaufschräge abgerundet in den übrigen Teil der ersten Tragplatten übergehen. Nicht nur in der Schließstellung sondern auch während des Schließvorgangs wird dadurch ein Kippen des Schließbügels verhindert. Zwischen den Schließelementen, Halteöse und Schließbügel, wirkt stets die konstruktiv vorgesehene Pressfläche. Die Kosten für die Herstellung des Entkopplungselementes verringern sich.

Von besonderem Vorteil ist, wenn die erste Tragplatte und die zweite Tragplatte einander um- oder durchgreifend ausgebildet sind und Teilabschnitte aufweisen, die einander auf der Höhe des Schnappverschlusses überkreuzen, so dass die in Zugrichtung vor- und hinter dem Schnappverschluß liegenden Anteile der Gummischicht beide unter der Zugbelastung des Schnappverschlusses auf Druck beansprucht sind. Es gibt keine auf Zug beanspruchte Gummi-Metallverbindung. Ein Versagen aufgrund eines Adhäsionsbruchs ist damit ausgeschlossen. Die Verformbarkeit des auf Druck beanspruchten Elastomers ist weitaus geringer als jene unter Zugbeanspruchung. Damit ist auch das Kippen des Schließbügels geringer.

Es ist von Vorteil, wenn die erste und/oder die zweite Tragplatte durch zumindest eine in ihrem Randbereich angeordnete Sicke und/oder Abkantung versteift sind. Dadurch vergrößert sich das Widerstandsmoment der Tragplatte.

Hierbei empfiehlt sich, die einander gegenüberliegenden Sicken und oder Abkantungen unter optischer Überdeckung der Gummischicht mit Spiel ineinandergreifend auszubilden. Die Gummischicht und auch von der Gummischicht angezogene Schmutzbestandteile sind dadurch nicht mehr sichtbar. Auch in den Randbereichen sind die Tragplatten durch eine Lackierung beschichtbar.

Zur weiteren Erläuterung der Erfindung wird auf die Zeichnungen Bezug genommen, in deren Figuren verschiedene Ausführungsformen gemäß der Erfindung schematisch dargestellt sind. Es zeigen:
- Fig. 1: in vereinfachter schematischer Darstellung einen Schnitt durch die erfindungsgemäße Anordnung der Schließbügelentkopplung,
- Fig. 2: in vereinfachter schematischer Darstellung einen Schnitt durch die erfindungsgemäße Anordnung der Schließbügelentkopplung in einer bevorzugten Ausführungsform,
- Fig. 3: eine besonders bevorzugte Ausführungsform der erfindungsgemäßen Schließbügelentkopplung in perspektivischer Darstellung,
- Fig. 4: die besonders bevorzugte Ausführungsform der erfindungsgemäßen Schließbügelentkopplung in einer Draufsicht,
- Fig. 5: die besonders bevorzugte Ausführungsform der erfindungsgemäßen Schließbügelentkopplung in einem Schnitt durch Fig. 4 gemäß der Linie B-B,
- Fig. 6: die besonders bevorzugte Ausführungsform der erfindungsgemäßen Schließbügelentkopplung in einem Schnitt durch Figur 4 gemäß der Linie A-A.
- Fig. 7: eine mittels eines Scharniers aufklappbar an einer Karosserie befestigten Heckklappe gemäß dem Stand der Technik,
- Fig. 8: die bevorzugte Ausführungsform der erfindungsgemäßen Schließbügelentkopplung in einem Schnitt durch Fig. 1 gemäß der Linie A-A.

### Ausführung der Erfindung

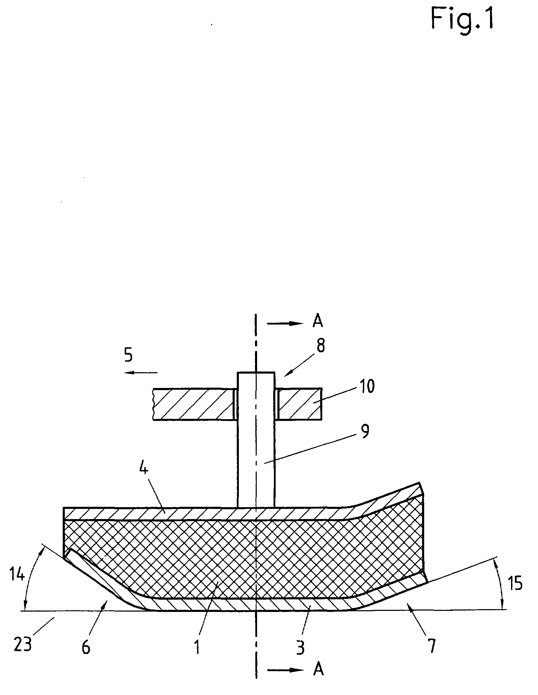

In Figur 1 ist in einer vereinfachten schematischen Darstellung ein Schnitt durch die erfindungsgemäßen Anordnung der Schließbügelentkopplung gezeigt. Ein Schnappverschluß 8 wird durch einen Schließbügel 9 und durch ein vorstehendes Ende einer Halteöse 10 gebildet. Der Schließbügel 9 ist unter einer elastischen Zugbelastung in der Halteöse 10 einschnappbar. Die Richtung der beim Schließen des Türflügels eingeleiteten Zugbelastung ist durch den Pfeil 5 gezeigt. Der Schließbügel 9, der auch als Bolzen ausgebildet sein kann, ist an der zweiten Tragplatte 4 beispielsweise durch eine Nietverbindung befestigt. Zwischen der zweiten Tragplatte 4 und der an der Karosserie festgelegten ersten Tragplatte 3 ist eine Gummischicht 1 festgelegt. Die Befestigung der Gummischicht zwischen den Tragplatten kann beispielsweise durch Vulkanisation oder Kleben erfolgen. Wie in Figur 1 dargestellt, erstreckt sich die Gummischicht in Zugrichtung 5 gesehen sowohl in einen Abschnitt der vor dem Schnappverschluss 8 liegt als auch in einen Bereich, der hinter dem Schnappverschluss angeordnet ist. Die erste Tragplatte 3 weist eine Auflaufschräge 6 auf, die an einem in Richtung 5 der Zugbelastung weisenden vorderen Ende der Tragplatte angeordnet ist. Die Auflaufschräge hintergreift in einem Teilbereich die Gummischicht 1. Mit der Karosserie 23 oder der gedachten Verlängerung der Tragplatte 3, schließt die Auflaufschräge 6 einen Winkel 14 ein. Beim Schließen des Türflügels wird durch die Halteöse 10 auf den Schließbügel 9 eine Kraft ausgeübt.
Die erste Tragplatte 4 leitet diese auf die Gummischicht 1 weiter. Aufgrund der adhäsiven Verbindung zwischen Elastomer 1 und Tragplatten (3,4) entsteht im Gummikörper eine Schubbeanspruchung. Im Bereich der Auflaufschräge 6 überlagert sich diese Schubbeanspruchung mit einer durch die Auflaufschräge verursachten Gegenkraft, die auf den Bolzen bzw. Bügel 9 in der Zeichnungsebene in Uhrzeigerrichtung ein Drehmoment ausübt. Die Ablaufschräge 7, die mit der Karosserie 23 oder der gedachten Verlängerung der Tragplatte 3 den Winkel 15 einschließt, begünstig diese Kippbewegung des Schließbügels, der sich zwar in Richtung 5 der Zugbelastung geringfügig verlagert, aber nicht in diese Richtung kippt. Elastomer 1 und Auflaufschräge wirken dem Kippen entgegen. In der Schließstellung wirkt zwischen den Schließelementen, der Halteöse und dem Schließbügel die konstruktiv vorgesehene Pressfläche. Die Mantelfläche des Bolzens wird von der inneren Mantelfläche der Öse anliegend umschlossen. Es kommt nicht zum Verkanten und damit auch nicht zu erhöhtem Verschleiß.

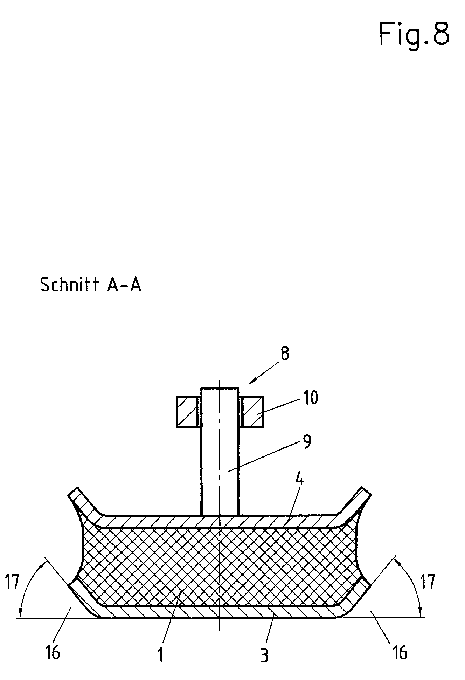

Fig. 8 zeigt eine bevorzugte Ausführungsform der Erfindung in einem Schnitt durch Fig. 1 gemäß der Linie A - A. Die Darstellung zeigt, die zwischen den Tragplatten 3,4 einvulkanisierte Gummischicht 1, wobei die Gummischicht 1 von der ersten Tragplatte 3 auf beiden Seiten mit einer Seitenschräge 16 umgriffen wird. Dabei schließt jede Seitenschräge 16 mit der gedachten Verlängerung der ersten Tragplatte 3 einen Winkel 17 ein. Die Seitenschräge 16 bildet eine in Richtung 5 der Zugbelastung wirkende seitliche Führung. In der Schließstellung umgreift die Halteöse 10 den Schließbügel 9 mit der gesamten konstruktiv vorgesehenen Pressfläche. Es wird verhindert, dass sich die Halteöse durch seitliches Verkanten in den Schließbügel einarbeitet.

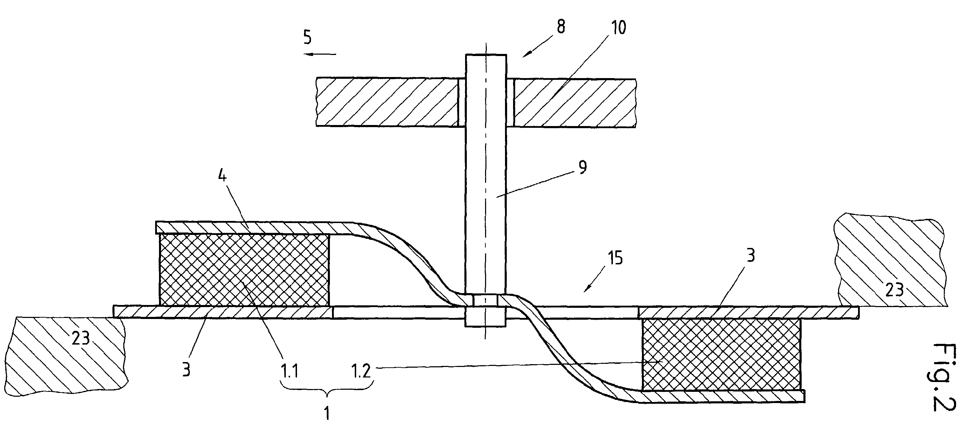

Fig. 2 zeigt in vereinfachter schematischer Darstellung einen Schnitt durch eine bevorzugte Ausführungsform. Die erste Tragplatte 3 ist an der Karosserie 23 festgelegt. Sie weist eine Durchbrechung 15 auf, welche durch Teilabschnitte der zweiten Tragplatte 4 durchgriffen wird. An der Tragplatte 4 ist der Schließbügel 9 befestigt. Auf diesen wirkt durch den Schnappverschluss 8 in Richtung des Pfeils 5 eine elastische Zugbeanspruchung. Zwischen den Tragplatten 3, 4 ist eine Gummischicht 1 einvulkanisiert. In Zugrichtung 5 gesehen, weist diese einen vor dem Schnappverschluss 8 liegenden Anteil 1.2 und einen nach dem Schnappverschluss 8 angeordneten Anteil 1.1 auf. Durch die einander durchgreifend ausgebildeten Tragplatten wird die in Richtung 5 wirkende Zugbelastung in eine Scher-/Druckbelastung der Elastomerkörper 1.1 und 1.2 umgesetzt. Da auf beide Anteile 1.1 und 1.2 des Elastomerkörpers 1 eine Druck- und keine Zugbeanspruchung wirkt, kommt es zu einer gewünschten achsparallelen Verlagerung des Schließbügels 9 in Richtung der Zugbeanspruchung, die Verkippung des Schließbügels ist aber auf Bruchteile eines Winkelgrades begrenzt.

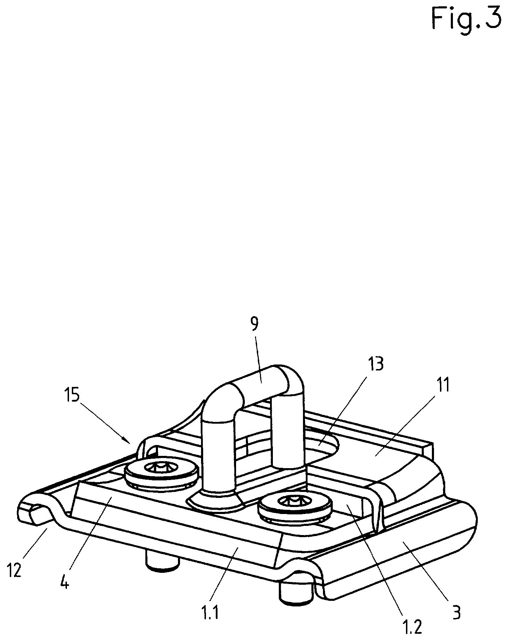

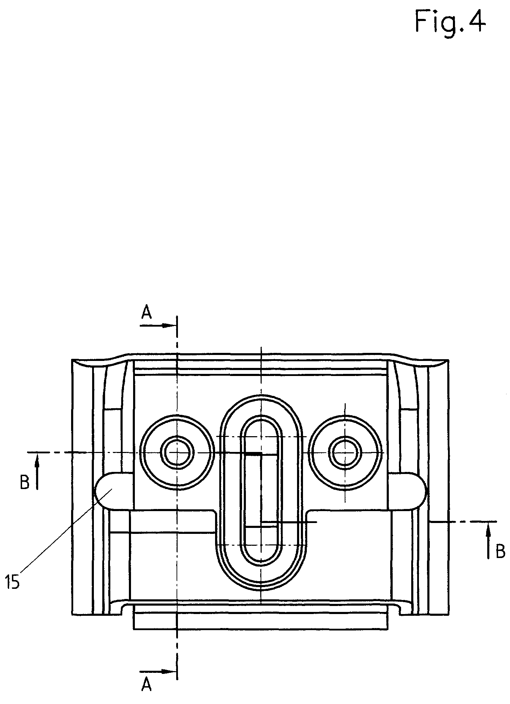

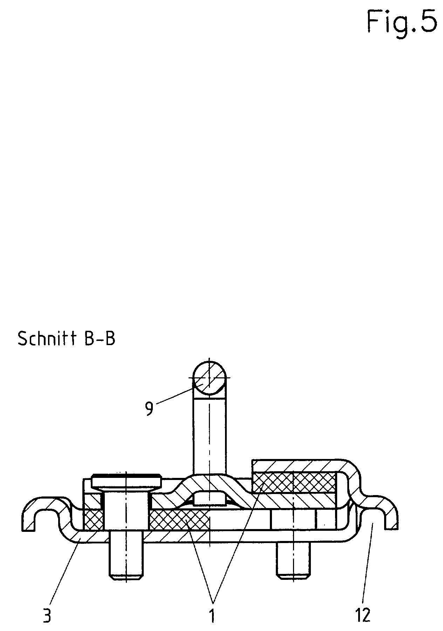

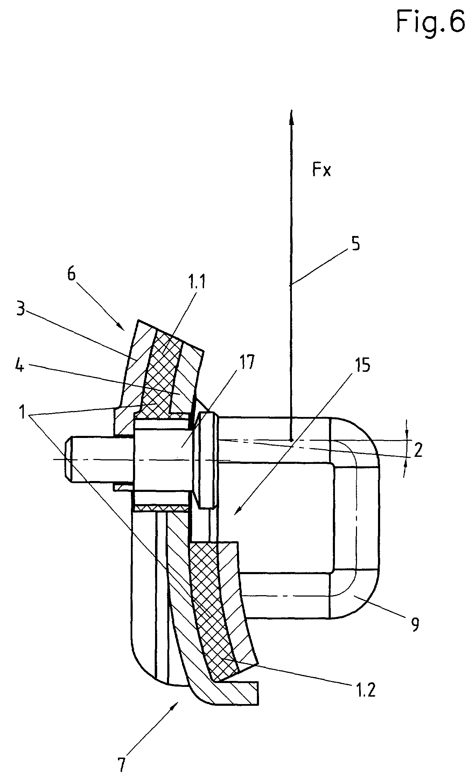

Die Zeichnungen in Fig. 3 bis Fig. 6 zeigen eine besonders bevorzugte Ausführungsform der Erfindung. Diese Ausführungsform vereinigt die oben erläuterten und in Fig. 1 und Fig 2 dargestellten Wirkprinzipien. Wie am besten aus der Schnittdarstellung der Fig. 6 zu entnehmen, ist mittels Bundschraube 17 die an der Karosserie festgelegte erste Tragplatte 3 mit einer Auflaufschräge 6 und einer Ablaufschräge 7 versehen. Die Bundschraube 17 dient desweiteren als Bruchsicherung bei Überlast oder Crash. Der Schließbügel 9 ist unter einer elastischen Zugbelastung in eine in Figur 6 nicht dargestellte Halteöse einschnappbar. Diese Zugbelastung ist in Fig. 6 durch den mit Fx bezeichneten Pfeil 5, der an einem Schenkel des Schließbügels angreift, dargestellt. Die elastisch nachgiebige Relativbewegung zwischen Schließbügel und Karosserie wird durch eine Gummischicht 1 bewirkt, welche in einem, zwischen den Tragplatten 3 und 4 gebildeten Spalt einvulkanisiert ist. Wie am besten aus der räumlichen Darstellung der Fig. 3 zu entnehmen ist, weist die Tragplatte 3 eine Durchbrechung 15 auf. Die zweite Tragplatte 4 durchgreift diese Durchbrechung 15. Beide Tragplatten 3,4 sind in einem Abstand zueinander angeordnet. In Zugrichtung gesehen begrenzen sie jeweils in einem vor bzw. hinter dem Schnappverschluss angeordneten Abschnitt jeweils einen Spalt, in welchem ein Anteil 1.2 bzw. 1.1 der Gummischicht einvulkanisiert ist. Durch die Zugbelastung des Schnappverschlusses kommt es zu einer elastischen Verformung der beiden Anteile 1.1 und 1.2 der Gummischicht. Auf jeden dieser Anteile wirkt eine Schubbeanspruchung und - aufgrund der einander durchgreifend ausgebildeten Tragplatten - eine Druckbeanspruchung. Da aber bei Elastomeren der Schubmodul etwa um den Faktor 1000 kleiner ist als der Kompressionsmodul wirkt das Elastomer der Relativverlagerung des Schließbügels mit unterschiedlich großen, elastischen Verformungsgegenkräften entgegen. Infolge dieser Verformungskräften gleitet die Tragplatte 4 der Auflaufschräge 6 der Tragplatte 3 hoch. In Zugrichtung gesehen vor dem Schnappverschluss gleitet die Tragplatte 3, die Ablaufschräge 7 der Tragplatte 4 hinab, wodurch einer Verkippung des Schließbügels in Richtung der Zugeblastung entgegengewirkt wird. Auf dem Schließbügel wirkt ein - in Figur 6 in Richtung des Uhrzeigersinns gerichtetes -Drehmoment. Die Erfindung ermöglicht dem Fachmann durch geeignete Wahl der Werkstoffeigenschaften des Elastomers und durch entsprechend konstruktive Ausgestaltung von Auflaufschräge 6 und Ablaufschräge 7, dass der Schließbügel während des Einschnappens und in der Schließstellung gegenüber der Halteöse nur um einen auf wenige Bruchteile eines Winkelgrades begrenzten Kippwinkel 2 kippt. Da die Schließelemente nicht verkanten, vergrößert sich die Dauerhaltbarkeit des Schließmechanismus. Da der Schließbügel nicht in Richtung des Scharniers der Tür kippt, kommt es nicht zu einer Annäherung des Türflügels im Bereich der Schließelemente. In der geschlossenen Position wird der Türflügel gegenüber dem Ausschnitt der Karosserie gleich großem Abstand gehalten. Abdichtungsprobleme werden dadurch verringert und die im Spalt zwischen Karosserie und Tür umlaufende Elastomerdichtung kann kostengünstiger ausgeführt werden. Bei der in Fig. 3 bis Fig. 6 dargestellten Ausgestaltung der Erfindung liegt ein Schenkel des Schließbügels 9 in einer Ausnehmung 13 eines Querteils 11 der ersten Tragplatte 3. Dadurch ist ein sehr kompakter, kostengünstiger Aufbau möglich. Dank der Erfindung kann eine Heckklappe als Tilgermasse gegen Fahrgeräusche im Innenraum wirken, ohne dass es zu einer erhöhten Abnutzung zwischen Schließbügel und Halteöse kommt. Um die elastische Verformung der Gummischicht 1 zu begrenzen, ist die zweite Tragplatte 4 im Bereich der Gummischicht 1.2 mit einer Abkantung versehen, die mit der Tragplatte 3 einen Anschlag bildet.

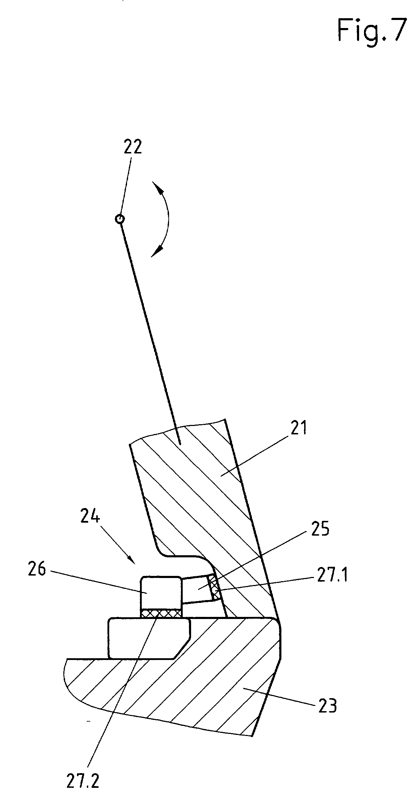

Eine schwingungsentkoppelte Heckklappentür gemäß dem Stand der Technik ist in Figur 7 dargestellt. Die Heckklappe 21 ist über das Scharnier 22 aufklappbar an einer Karosserie 23 befestigt. Der Türflügel 21 wird in der geschlossenen Position durch das Schloss 24 mit Schließbügel 26 und Schließzylinder 25 gehalten. Durch entsprechend ausgelegte Kopplungselemente 27.1 und 27.2 wirkt die Heckklappe 21 als Tilgermasse und wirkt den insbesondere bei Kombifahrzeugen auftretenden, störenden Innenraumgeräuschen entgegen.

## Patentansprüche

1. Fahrzeugtür, umfassend zumindest einen mittels eines Scharniers aufklappbar an einer Karosserie befestigten Türflügel sowie einen Schnappverschluss, der an dem dem Scharnier gegenüberliegenden Ende des Türflügels angebracht ist und zumindest einen Schließbügel umfasst, der unter einer in Richtung des Scharniers gerichteten elastischen Zugbelastung im vorstehenden Ende einer Halteöse einschnappbar ist, der Schnappverschluss und die Karosserie und/oder der Türflügel durch eine Gummischicht relativ beweglich verbunden sind, die Gummischicht den Spalt zwischen zwei Tragplatten ausfüllt und in diesem festgelegt ist, die Tragplatten einerseits an der Karosserie und andererseits an der Tür starr festgelegt sind, **dadurch gekennzeichnet, dass** die Gummischicht (1) Anteile (1.2, 1.1) aufweist, die in Zugrichtung vor und hinter dem Schnappverschluss (8) angeordnet sind und dass die an der Karosserie festgelegte, erste Tragplatte (3) die Gummischicht an dem in Richtung (5) der Zugbelastung weisenden, vorderen Ende mit einer ersten Auflaufschräge (6) in einem ersten Teilbereich hintergreift.

2. Fahrzeugtür nach Anspruch 1, **dadurch gekennzeichnet, dass** die Auflaufschräge (6) die Gummischicht (1) an dem in Richtung (5) der Zugspannung weisenden, vorderen Ende zusätzlich in einem Teilbereich zumindest auf einer Seite mit einer Seitenschräge (16) umgreift.

3. Fahrzeugtür nach Anspruch 2, **dadurch gekennzeichnet, dass** die erste Tragplatte (3) an dem von der Auflaufschräge (6) abgewandten Ende mit einer Ablaufschräge (7) versehen ist, die die Gummischicht (1) an diesem Ende in einem zweiten Teilbereich hintergreift.

4. Fahrzeugtür nach Anspruch 3, **dadurch gekennzeichnet, dass** die erste Auflaufschräge (6) und die erste Tragplatte (3) mit der gedachten Verlängerung der Tragplatte, bezogen auf deren Verlauf in der Höhe des Schnappverschlusses (8), einen steileren Anstellwinkel (14) miteinander einschließen als die Abflaufschräge (7) und die Verlängerung.

5. Fahrzeugtür nach Anspruch 3, **dadurch gekennzeichnet, dass** die erste Auflaufschräge (6) und/oder die Ablaufschräge (7) abgerundet in den übrigen Teil der ersten Tragplatte (3) übergehen.

6. Fahrzeugtür nach einem der vorstehenden Ansprüche, **dadurch gekennzeichnet, dass** die erste Tragplatte (3) und die zweite Tragplatte (4) einander um- oder durchgreifend ausgebildet sind und Teilabschnitte aufweisen, die einander auf der Höhe des Schnappverschlusses (8) überkreuzen, so dass die in Zugrichtung vor und hinter dem Schnappverschluss (8) liegenden Anteile (1.1, 1.2) der Gummischicht (1) beide unter der Zugbelastung des Schnappverschlusses auf Druck beansprucht sind.

7. Fahrzeugtür nach einem der vorstehenden Ansprüche, **dadurch gekennzeichnet, dass** die erste und/oder die zweite Tragplatte (3, 4) durch zumindest eine in ihrem Randbereich angeordnete Sicke- und/oder Abkantung (12) versteift sind.

8. Fahrzeugtür nach Anspruch 7, **dadurch gekennzeichnet, dass** die einander gegenüberliegende Sicken und/oder Abkantungen (12) unter optischer Überdeckung der Gummischicht (1) mit Spiel ineinandergreifend ausgebildet sind.
